(19) Europäisches Patentamt
European Patent Office
Office européen des brevets

(11) **EP 2 527 970 B1**

(12) **FASCICULE DE BREVET EUROPEEN**

(45) Date de publication et mention
de la délivrance du brevet:
**06.07.2016 Bulletin 2016/27**

(51) Int Cl.:
*G06F 7/72* (2006.01)          *H04L 9/12* (2006.01)
*H04L 9/30* (2006.01)

(21) Numéro de dépôt: **12169583.7**

(22) Date de dépôt: **25.05.2012**

(54) **Procédé d'encodage cryptographique sur une courbe elliptique**

Kryptografisches Kodierverfahren auf einer elliptischen Kurve

Method for cryptographic encoding on an elliptic curve

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.05.2011 FR 1154680**

(43) Date de publication de la demande:
**28.11.2012 Bulletin 2012/48**

(73) Titulaire: **Oberthur Technologies
92700 Colombes (FR)**

(72) Inventeurs:
• **Sierra, Yannick
92726 Nanterre Cedex (FR)**
• **Rondepierre, Franck
92726 Nanterre Cedex (FR)**

(74) Mandataire: **Orsini, Fabienne
Coralis
14/16, rue Ballu
75009 Paris (FR)**

(56) Documents cités:
**WO-A1-96/04602     FR-A1- 2 946 819**

• **Anonyme: "MACHINE READABLE TRAVEL
DOCUMENTS, TECHNICAL REPORT,
Supplemental Access Control for Machine
Readable Travel Documents, Version - 1.01",
ICAO , 11 novembre 2010 (2010-11-11),
XP055013829, Extrait de l'Internet:
URL:http://www2.icao.int/en/MRTD/Downloads
/Technical Reports/Technical Report.pdf [extrait
le 2011-12-01]**

EP 2 527 970 B1

**Description**

**1. DOMAINE DE L'INVENTION**

Le domaine de l'invention est celui de la cryptographie.

Plus précisément, l'invention concerne une technique pouvant être utilisée dans des cryptosystèmes basés sur des courbes elliptiques.

L'invention concerne notamment une technique permettant à au moins deux dispositifs de partager un même point appartenant à une courbe elliptique.

**2. ARRIÈRE-PLAN TECHNOLOGIQUE**

Dans le domaine de la cryptographie, l'utilisation des courbes elliptiques est de plus en plus fréquente car celles-ci présentent de nombreux avantages. Par exemple, les cryptosystèmes basés sur des courbes elliptiques ont des tailles de clés (ainsi que des paramètres) relativement petits comparés à d'autres cryptosystèmes basés sur d'autres outils mathématiques (tel que le RSA, le DSA, etc...). Ceci est particulièrement avantageux lorsque des dispositifs de communications disposent de peu de ressources matérielles (peu de RAM (acronyme anglais de « *Random Access Memory* ») ou de ROM (acronyme anglais de « *Read Only Memory* »)).

Il convient de remarquer que certains cryptosystèmes nécessitent d'utiliser une fonction d'encodage particulière permettant de faire correspondre à une suite binaire donnée (i.e une succession de bits 0 et 1), un point sur une courbe elliptique. Cette fonction d'encodage peut notamment constituer une brique de base permettant de construire une fonction de hachage en temps déterministe qui peut ensuite être utilisée dans un système de signature/vérification numérique.

Le document **D1** correspondant à l'article « Indifferentiable Deterministic Hashing to Elliptic and Hyperelliptic Curves » de R.R. Farashahi et al. présente un tableau récapitulatif (cf. **§2.1)** des différentes fonctions d'encodage qui existent dans l'état de la technique en fonction de la caractéristique du corps de base (*2, 3* ou *p>3* avec *p* un nombre premier) et de conditions restrictives sur celle-ci. Ces fonctions d'encodage ont la propriété de posséder un temps d'exécution déterministe afin d'éviter des attaques du type par canaux cachés.

Une première fonction d'encodage, correspondant à la fonction d'encodage dite d'Icart, est explicitée dans le document **D2** correspondant à l'article « How to Hash into Elliptic Curves » de T. Icart, publié dans les annales de la conférence CRYPTO 09. Cette fonction d'encodage nécessite que la relation suivante soit vérifiée : *p = 2 mod 3.*

Une deuxième fonction d'encodage, correspondant à la fonction d'encodage simplifiée SWU (acronyme de « *Shallue-Woestijne-Ulas* »), est explicitée dans le document **D3** (cf. **§7**) correspondant à l'article « Efficient Indifferentiable Hashing into Ordinary Elliptic Curves» de Brier et al. publié sur le site de l'eprint. Cette fonction d'encodage nécessite que la relation suivante soit vérifiée : *p = 3 mod 4.* Remarquons que la plupart des courbes elliptiques utilisées dans les standards vérifie cette condition car lorsque cette propriété est vérifiée, le calcul des racines carrées est réalisée de manière simplifiée.

Un autre exemple d'application de ces fonctions d'encodage est décrit dans le document **D4** correspondant à la note technique « Supplemental Access control for Machine Readable Travel Documents v.1.01 » publié par l'organisme ICAO (acronyme anglais de « International Civil Aviation Organization »). Plus précisément les passeports de troisième génération doivent être conformes aux exigences du document **D4** dans lequel un protocole d'accès aux données appelé PACE (acronyme anglais de « *Password Authenticated Connection Establishment* ») est utilisé, lui-même nécessitant l'utilisation d'une fonction d'encodage (cf. **§5 :** « *Point Encoding for the Integrated Mapping* »). Le document **D4** propose d'utiliser comme fonction d'encodage la version simplifiée de la fonction d'encodage SWU en intégrant une optimisation permettant de s'affranchir de la réalisation de certains calculs (notamment le calcul de la racine carrée de l'élément $h_3$).

Ainsi, il est proposé deux implémentations de cette version simplifiée optimisée de la fonction d'encodage SWU dans le document **D4.** La première implémentation permet d'obtenir un point représenté par des coordonnées affines. La deuxième implémentation permet quand à elle d'obtenir un point représenté par des coordonnées jacobiennes.

Cependant, selon l'implémentation de la fonction d'encodage simplifiée SWU choisie, soit en coordonnées jacobiennes, soit en coordonnées affines, les points obtenus qui devraient être identiques peuvent s'avérer être des points opposés l'un de l'autre. Dès lors, cette singularité peut avoir des incidences importantes dans l'utilisation d'un procédé cryptographique (vérification d'une signature refusée de par le fait que la fonction de hachage basée sur la fonction d'encodage simplifiée SWU ne fournit par le même point selon l'implémentation utilisée).

L'Homme du Métier, pour pallier ce problème aurait pu :

- soit utiliser une autre fonction d'encodage pour laquelle un tel problème n'existe pas (par exemple la fonction d'Icart). Il en aurait été incité par le document **D5** correspondant à l'article « Supplemental Access control (PACE v2) : Security Analysis of PACE Integrated Mapping » de J.S. Coron et al. publié sur le site de l'eprint, qui propose d'utiliser la fonction d'encodage d'Icart dans le protocole PACE, fonction d'encodage pour laquelle, quelque soit l'implémentation (soit en coordonnées jacobiennes, soit en coordonnée affines), le point obtenu est identique ;

- soit intégrer un bit supplémentaire à transmettre lors des échanges entre les dispositifs permettant de connaître l'implémentation qui est utilisée afin de procéder aux mêmes calculs.

Cette deuxième solution comporte l'inconvénient de modifier les protocoles déjà existants (notamment les API des fonctions utilisées), ce qui peut causer des problèmes d'interopérabilité.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique de modification de la fonction d'encodage simplifiée SWU permettant d'obtenir le même point lorsque les systèmes de représentation de coordonnées sont différents.

Un autre objectif d'au moins un mode de réalisation de l'invention est de fournir une telle technique qui ne nécessite que peu de calculs supplémentaires.

Un objectif complémentaire d'au moins un mode de réalisation de l'invention est de fournir une telle technique qui soit facile à mettre en oeuvre.

### 4. EXPOSÉ DE L'INVENTION

On décrit ci-après un procédé d'exécution d'une partie d'un calcul cryptographique par un second dispositif, ledit calcul cryptographique étant exécuté entre un premier dispositif et ledit second dispositif et comprenant une étape, mise en oeuvre dans un composant électronique de chacun des premier et second dispositifs, de détermination d'un point appartenant à une courbe elliptique définie sur un corps fini de caractéristique $p>3$, avec $p$ un nombre premier vérifiant la propriété $p = 3 \bmod 4$, ladite étape de détermination comprenant une étape d'exécution d'une fonction d'encodage simplifiée SWU (Shallue-Woestijne-Ulas) à partir d'un élément $u$, partagé entre les premier et second dispositifs, appartenant au corps fini $F_p$. L'étape d'exécution d'une fonction d'encodage simplifiée SWU par ledit second dispositif est réalisée avec un second système de représentation de coordonnées des points différent d'un premier système de représentation de coordonnées des points avec lequel est réalisée l'étape d'exécution d'une fonction d'encodage simplifiée SWU par ledit premier dispositif et la fonction d'encodage simplifiée SWU exécutée par ledit second dispositif comprend en outre des étapes de correction permettant d'obtenir un point équivalent identique entre lesdits premier et second dispositifs.

Le principe général consiste donc à modifier une des implémentations de la fonction d'encodage simplifiée SWU, via l'utilisation d'étapes de correction, de sorte que lorsque les systèmes de coordonnées utilisés par les dispositifs sont différents, un point identique soit obtenu.

Il est ainsi notamment décrit un procédé dans lequel ledit premier système de représentation correspond au système de représentation en affine, ledit second système de représentation correspond au système de représentation en jacobienne, et les étapes de correction de la fonction d'encodage simplifiée SWU consistent à déterminer un élément $Z$ de sorte que $(Z/p) = 1$ où $(Z/p)$ correspond au symbole de Legendre.

Ainsi, les étapes de correction corrigent l'influence du symbole de Legendre présent dans une relation reliant les coordonnées des points qui auraient pu être obtenus suite à l'exécution de la fonction d'encodage simplifiée SWU par le premier dispositif et à l'exécution de la fonction d'encodage simplifiée SWU par le deuxième dispositif ne comprenant pas d'étapes de correction.

Pour un tel procédé, les étapes de correction de la fonction d'encodage simplifiée consistent à corriger la coordonnée $Z$ telle que $Z = V^2 \bmod p$ avec $V = a(\alpha + \alpha^2) \bmod p$ et $\alpha = -u^2 \bmod p$ ainsi qu'à corriger une variable intermédiaire.

On décrit un procédé dans lequel ledit premier système de représentation correspond au système de représentation en affine, ledit second système de représentation correspond au système de représentation en jacobienne, et les étapes de correction de la fonction d'encodage simplifié consistent à modifier uniquement la coordonnée $Y$ de sorte que l'équation suivante soit vérifiée $Y = y Z^3$.

Dans ce contexte, l'invention propose un procédé cryptographique selon la revendication 1.

Il est également décrit un procédé dans lequel ledit premier système de représentation correspond au système de représentation en jacobienne, ledit second système de représentation correspond au système de représentation en affine, et les étapes de correction de la fonction d'encodage simplifiée consistent à modifier la coordonnée $y$ de sorte que l'équation suivante soit vérifiée $Y = y Z^3$.

L'invention propose ainsi un procédé cryptographique selon la revendication 2.

On décrit également un procédé dans lequel ledit premier système de représentation correspond au système de représentation en affine, ledit second système de représentation correspond au système de représentation en projective homogène, et les étapes de correction de la fonction d'encodage simplifiée consistent à modifier la coordonnée $Y$ de sorte que l'équation suivante soit vérifiée $Y = y\,Z$.

On décrit enfin un procédé dans lequel ledit premier système de représentation correspond au système de représentation en jacobienne $(X_{Jac}, Y_{Jac}, Z_{Jac})$, ledit second système de représentation correspond au système de représentation en projective homogène $(X_{ProjH}, Y_{ProjH}, Z_{ProjH})$, et les étapes de correction de la fonction d'encodage simplifiée consistent à modifier la coordonnée $Y_{ProjH}$ de sorte que l'équation suivante soit vérifiée $Y_{Jac} = Y_{ProjH}\,Z^2$.

## 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 présente les principales étapes du protocole PACE jusqu'à l'utilisation (incluse) d'une fonction d'encodage, selon un mode de réalisation de l'invention;
- la figure 2 présente un dispositif selon un mode de réalisation de l'invention.

## 6. DESCRIPTION DÉTAILLÉE

Sur toutes les figures du présent document, les éléments et étapes identiques sont désignés par une même référence numérique.

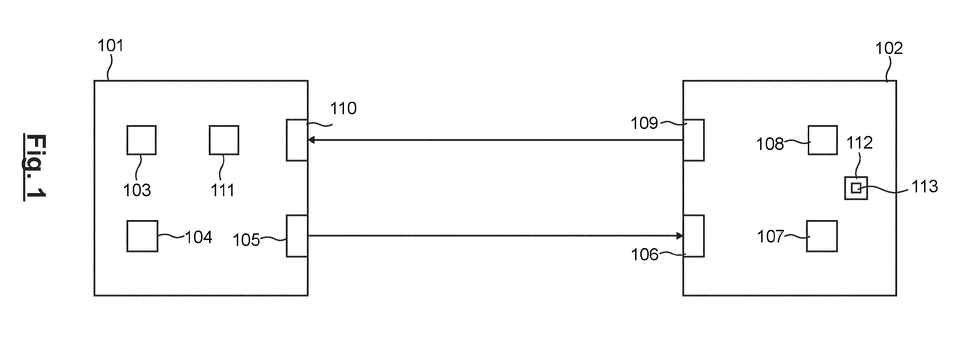

La figure 1 présente les principales étapes du protocole PACE jusqu'à l'utilisation (incluse) d'une fonction d'encodage, selon un mode de réalisation de l'invention. Plus précisément, et en relation avec le paragraphe 2.3 du document D5, deux dispositifs 101 et 102 souhaitant procéder au partage d'un même point sur une courbe elliptique et partageant déjà certains éléments (par exemple les paramètres d'une courbe elliptique, une suite de fonctions cryptographiques de chiffrement, déchiffrement, d'encodage, de hachage à utiliser, et un mot de passe $W$) procèdent de la sorte :

Le dispositif 101 génère un nombre aléatoire $d_1$ à partir d'un générateur d'aléa 103. Ce nombre aléatoire $d_1$ est ensuite chiffré via un bloc particulier 104 qui met en oeuvre une fonction de chiffrement $E$ qui utilise le mot de passe $W$ comme clé de chiffrement. Le chiffré obtenu $c_1$ est ensuite transmis à un autre dispositif 102 via un module de transmission 105.

Un module de réception 106 compris dans le dispositif 102 réceptionne le chiffré $c_1$ et le transmet à un module de déchiffrement 107 qui, déchiffre celui-ci grâce notamment à l'utilisation du mot de passe partagé $W$.

Le dispositif 102 génère un nombre aléatoire $d_2$ à partir d'un générateur d'aléa 108 et transmet celui-ci, via un module de transmission 109 à destination du dispositif 101. Celui-ci réceptionne le nombre aléatoire $d_2$ via un module de réception 110.

Chacun des dispositifs utilise alors la même fonction d'encodage (mais les choix d'implémentations peuvent être différents) afin d'obtenir le même point d'une courbe elliptique, via les deux modules 111 et 112.

Cette fonction d'encodage consiste à encoder l'élément $u = H(d_1 d_2)$ où $H$ est une fonction de hachage classique (par exemple le SHA-2) et $d_1 d_2$ correspond à la concaténation des nombres aléatoires $d_1$ et $d_2$. Ce point est par la suite utilisé dans des opérations de multiplications scalaires. Par conséquent, si les points obtenus sont différents, cela peut avoir une forte incidence dans la suite des calculs.

Dans l'état de la technique, il est décrit deux manières d'implémenter la fonction d'encodage simplifiée SWU (cf. par exemple le paragraphe 5 du document **D4).**

L'implémentation de la fonction d'encodage simplifiée SWU permettant d'obtenir un point en coordonnées affines à partir d'un élément $u$ comprend la succession des étapes suivantes :

a) $\alpha = -u^2 \bmod p$

b) $X_2 = -b\,((1 + \alpha + \alpha^2) \,/\, (a(\alpha + \alpha^2)))\bmod p$

c) $X_3 = \alpha\,X_2 \bmod p$

d) $h_2 = (X_2)^3 + aX_2 + b \bmod p$

e) $h_3 = (X_3)^3 + aX_3 + b \bmod p$

f) $U = u^3 h_2 \bmod p$

g) $A = (h_2)^{p-1-(p+1)/4} \bmod p$

h) si $A^2 h_2 = 1 \bmod p$ alors $(x, y) = (X_2, Ah_2 \bmod p)$

i) sinon $(x, y) = (X_3.\ AU \bmod p\ )$

En revanche, l'implémentation de la fonction d'encodage simplifiée SWU permettant d'obtenir un point en coordonnées jacobiennes à partir d'un élément $u$ comprend la succession des étapes suivantes :

*a)* $\alpha = -u^2 \bmod p$
*b)* $Z = a(\alpha + \alpha^2) \bmod p$
*c)* $X_2 = -bZ(1 + \alpha + \alpha^2) \bmod p$
*d)* $X_3 = \alpha X_2 \bmod p$
*e)* $h_2 = (X_2)^3 + aX_2 Z^4 + bZ^6 \bmod p$
*f)* $h_3 = (X_3)^3 + aX_3 Z^4 + bZ^6 \bmod p$
*g)* $U = u^2 h_2 \bmod p$
*h)* $A = (h_2)^{p-1-(p+1)/4} \bmod p$
*i)* si $A^2 h_2 = 1 \bmod p$ alors $(X, Y, Z) = (X_2, A h_2 \bmod p, Z)$
*j)* sinon $(X, Y, Z) = (X_3, AU \bmod p, Z)$

A partir d'un point *(X,Y,Z)* en coordonnées jacobiennes, on définit le point *(X/Z², Y/Z³)* comme son équivalent affine. Or il s'avère que parfois, avec ces 2 implémentations, les points *(x,y)* et *(X/Z², Y/Z³)* sont différents. On a alors *y=-Y/Z³*.

Désormais, nous ajouterons en indice les symboles *Jac* et *Aff* à une variable quelconque *T* de sorte que, l'élément $T_{Jac}$ désigne la variable *T* obtenu dans la version initiale de la fonction d'encodage simplifiée SWU permettant d'obtenir un point en coordonnées jacobiennes, et l'élément $T_{Aff}$ désigne la variable T obtenu dans la version initiale de la fonction d'encodage simplifiée SWU permettant d'obtenir un point en coordonnées affines (de même, dans cette description, nous utiliserons aussi le symbole *ProjH,* en indice, pour désigner des variables utilisées dans la fonction d'encodage simplifiée SWU permettant d'obtenir un point en coordonnées projectives homogènes).

Par construction, nous avons $X_{2\,Jac} = X_{2Aff} Z^2$, $h_{2\,Jac} = h_{2Aff} Z^6$ et $A_{Jac} = A_{Aff}(Z^6)^{p-1-(p+1)/4}$

Or nous pouvons remarquer que $(Z^6)^{p-1-(p+1)/4} = (\dfrac{Z}{p}).Z^3$ où $(\dfrac{Z}{p})$ correspond au symbole de Legendre.

En remarquant que si $h_{2\,Jac}$ est un résidu quadratique (alors $h_{2\,Aff}$ est aussi un résidu quadratique) alors $y = A_{Aff}\,h_{2Aff}$ et $Y = A_{Jac}\,h_{2Jac}$. Par conséquent $A_{Jac}\,h_{2\,Jac} = (\dfrac{Z}{p}).A_{Aff} Z^3 h_{2\,Aff} Z^6 = (\dfrac{Z}{p}).A_{Aff}\,h_{2\,Aff}\,Z^3$. Donc

$$Y = (\dfrac{Z}{p}).y\,Z^3.$$

De même, en remarquant que si $h_{2Jac}$ n'est pas un résidu quadratique (alors $h_{2\,Aff}$ n'est pas un résidu quadratique) alors $y = A_{Aff}\,U_{Aff}$ et $Y = A_{Jac}\,U_{Jac}$. Par conséquent $A_{Jac}\,U_{Jac} = (\dfrac{Z}{p}).A_{Aff}\,u^3\,h_{2\,Aff}\,Z^6 = (\dfrac{Z}{p}).A_{Aff}\,U_{Aff}\,Z^3$.

Donc $Y = (\dfrac{Z}{p}).y\,Z^3.$

**Ainsi, on a toujours la relation suivante qui est vérifiée :** $Y = (\dfrac{Z}{p}).y\,Z^3$ **du fait de l'utilisation de ces deux implémentations.**

En partant de cette équation, et en imposant le fait que l'on doit toujours obtenir $y = Y/Z^3$, il convient d'adapter soit la version affine, soit la version jacobienne de la fonction d'encodage simplifiée SWU. Plusieurs modes de réalisation permettent de réaliser cet objectif.

Ainsi, un module 113 compris dans le module 112 du dispositif 102 doit exécuter une fonction d'encodage simplifiée SWU modifiée si nécessaire. Ce module 113 peut implémenter l'un quelconque des modes de réalisation décrit par la suite.

Dans un premier mode de réalisation, il convient de modifier légèrement la fonction d'encodage simplifiée SWU permettant d'obtenir un point en coordonnées jacobiennes à partir d'un élément *u* en rajoutant des étapes de correction. Ainsi, la version modifiée d'un telle fonction comprend les étapes suivantes :

*a')* $\alpha = -u^2 \bmod p$
*b')* $V = a(\alpha + \alpha^2) \bmod p$ (correspondant au Z dans la version initiale, cf. étape *b)*)
*c')* **$Z = V^2 \bmod p$**
*d')* $X_2 = -bZV(1 + \alpha + \alpha^2) \bmod p$

e') $X_3 = \alpha X_2\ mod\ p$

f') $h_2 = (X_2)^3 + aX_2 Z^4 + bZ^6\ mod\ p$

g') $h_3 = (X_3)^3 + aX^3 Z^4 + bZ^6\ mod\ p$

h') $U = u^3 h_2\ mod\ p$

i') $A = (h_2)^{p-1-(p+1)/4}\ mod\ p$

j') si $A^2 h_2 = 1\ mod\ p$ alors $(X, Y, Z) = (X_2, Ah_2\ mod\ p\ , Z)$

k') sinon $(X, Y, Z) = (X_3, AU\ mod\ p, Z\ )$

Ainsi, les opérations de correction (une opération d'élévation au carré modulaire dans l'étape c') et une opération de multiplication modulaire dans l'étape d')) n'induisent qu'un léger surcoût.

Grâce à ces modifications, le problème précédemment mentionné ne peut plus se produire car désormais, l'élément $Z = a^2(\alpha + \alpha^2)^2\ mod\ p$ est un résidu quadratique. Par conséquent $\left(\dfrac{Z}{p}\right) = 1.$

Dans un deuxième mode de réalisation, il convient de modifier légèrement la fonction d'encodage simplifiée SWU permettant d'obtenir un point en coordonnées **jacobiennes** à partir d'un élément $u$ en rajoutant une étape de correction consistant à calculer $A_{Jac} = A_{Aff}.\ Z^{-3}$. Ainsi, la version modifiée d'une telle fonction comprend les étapes suivantes :

a) $\alpha = -u^2\ mod\ p$

b) $Z = a(\alpha + \alpha^2)\ mod\ p$

c) $X_2 = -bZ(1 + \alpha + \alpha^2\ )\ mod\ p$

d) $X_3 = \alpha\ X_2\ mod\ p$

e) $h_2\ (X_2)^3 + aX_2 Z^4 + bZ^6\ mod\ p$

f) $h_3 = (X^3)^3 + aX^3 Z^4 + bZ^6\ mod\ p$

g) $U = u^3 h_2\ mod\ p$

h) $A = Z.\ (h_2\ .\ Z^2)^{p-1-(p+1)/4}\ mod\ p$

i) si $A^2 h_2 = 1\ mod\ p$ alors $(X, Y, Z) = (X_2, Ah_2\ mod\ p\ , Z)$

j) sinon $(X, Y, Z) = (X_3, AU\ mod\ p, Z\ )$

Ainsi, les opérations de corrections (ne nécessitant que deux opérations supplémentaires de multiplication modulaire dans l'étape h), puisque le calcul de $Z^2$ est déjà effectué lors de l'étape e)) n'induisent qu'un léger surcoût. On obtient, à l'étape i), $Y = A_{Jac}\ h_{2Jac} = A_{Aff} Z^{-3}\ h_{2\ Aff} Z^6 = y\ Z^3$. Ainsi, l'influence du symbole de Lengendre a été éliminée. De même, on obtient bien, à l'étape j), $Y = A_{Jac}\ U_{Jac} = A_{Aff} Z^{-3}\ U_{Aff} Z^6 = y\ Z^3$.

Dans un troisième mode de réalisation, il convient de modifier légèrement la fonction d'encodage simplifiée SWU permettant d'obtenir un point en coordonnées **affines** à partir d'un élément $u$ en rajoutant une étape de correction consistant à remplacer la variable $A_{Aff}$ par $\left(\dfrac{Z}{p}\right).A_{Aff}$. Ainsi, la version modifiée d'une telle fonction d'encodage comprend les étapes suivantes :

a) $\alpha = -u^2\ mod\ p$

b) $X_2 = -b\ ((1 + \alpha + \alpha^2)\ /\ (T))\ mod\ p$ avec $T = a(\alpha + \alpha^2)\ mod\ p$

c) $X_3 = \alpha\ X_2\ mod\ p$

d) $h_2 = (X_2)^3 + aX_2 + b\ mod\ p$

e) $h_3 = (X_3)^3 + aX_3 + b\ mod\ p$

f) $U = u^3 h_2\ mod\ p$

g) $A = T(h_2\ T^2)^{p-1-(p+1)/4}\ mod\ p$

h) si $A^2 h_2 = 1\ mod\ p$ alors $(x, y) = (X_2, Ah_2\ mod\ p\ )$

i) sinon $(x, y) = (X_3, AU\ mod\ p\ )$

Ainsi, les opérations de corrections (ne nécessitant que deux opérations supplémentaires de multiplication modulaire dans l'étape g), ainsi qu'une opération d'élévation au carré (i.e le calcul de $T^2$ ) dans l'étape g)) n'induisent qu'un léger surcoût.

Dans un quatrième mode de réalisation, il convient de modifier légèrement la fonction d'encodage simplifiée SWU permettant d'obtenir un point en coordonnées **affines** à partir d'un élément $u$ en rajoutant une étape de correction consistant à calculer et introduire l'élément $s = (\dfrac{Z}{p})$ , de sorte que l'on ait le terme $s^2$ dans l'équation finale. Ainsi, la version modifiée d'une telle fonction d'encodage comprend les étapes suivantes :

a) $\alpha$ -$u^2$ mod p
b) $X_2 = -b.\textbf{\textit{s.R}}. (1 + \alpha + \alpha^2)$ mod p avec $T = a(\alpha+ \alpha^2)$ mod p, $R = T^{(p-1)/2-1}$ mod p et $s = T.R$ mod p
c) $X_3 = \alpha X_2$ mod p
d) $h_2 = (X_2)^3 + aX_2 + b$ mod p
e) $h_3 = (X_3)^3 + aX_3 + b$ mod p
f) $U = u^3 h_2$ mod p
g) $A = (h_2)^{p-1-(p+1)/4}$ mod p
h) si $A^2 h_2 = 1$ mod p alors $(x, y) = (X_2, s.Ah_2$ mod p $)$
i) sinon $(x, y) = (X_3, s.AU$ mod p $)$

De plus, il convient de remarquer que le calcul de l'élément $h_3$ qui est proposé dans le document **D4** n'est pas nécessaire, car l'élément $h_3$ n'est pas utilisé dans la suite des calculs. Ainsi, afin de réduire le temps d'exécution de la fonction simplifiée SWU, l'Homme du métier doit s'affranchir du calcul de $h_3$.

Remarquons qu'en utilisant les enseignements du paragraphe 5 du document **D4,** et en appliquant la technique de la présente invention, on obtient un cinquième mode de réalisation correspondant à l'implémentation de la fonction d'encodage simplifiée SWU suivante (permettant d'obtenir un point en coordonnées **projective homogène** à partir d'un élément ) :

a) $\alpha$ -$u^2$ mod p
b) $Z = a(\alpha+ \alpha^2)$ mod p
c) $X_2 = -b(1 + \alpha + \alpha^2 )$ mod p
d) $X_3 = \alpha X_2$ mod p
e) $h_2 = (X_2)^3 + aX_2 Z^2 + bZ^3$ mod p
f) $U = -u^3 h_2$ mod p
g) $A = (h_2 Z)^{p-1-(p+1)/4}$ mod p
h) si $A^2 h_2 Z = 1$ mod p alors $(X, Y, Z) = (X_2, Ah_2$ mod p $, Z)$
i) sinon $(X, Y, Z) = (X_3, AU$ mod p, Z $)$

En effet $X_{2\ Jac} = X_{2Aff} Z^2$, $h_{2\ Jac} = h_{2\ Aff} Z^6$ et $A_{\ Jac} = A_{\ Aff} (Z^6)^{\ p-1-(p+1)/4}$

Les éléments ont été choisis de sorte que $h_{2\ ProjH} = h_{2\ Aff} \cdot Z^3$ et $A_{\ ProjH} = A_{\ Aff} (Z^4)^{\ p-1-(p+1)/4} = A_{Aff} (Z^{-2})$;

En remarquant que si $h_{2\ ProjH}$ est un résidu quadratique alors $y = A_{\ Aff} h_{2\ Aff}$ et $Y = A_{ProjH} h_{2\ ProjH}$. Par conséquent $A_{ProjH} h_{2\ ProjH} = A_{\ Aff} (Z)^{\ -2} h_{2\ Aff} Z^3 = y Z$.

De même, en remarquant que si $h_{2\ Jac}$ n'est pas un résidu quadratique alors $y = A_{\ Aff} U_{Aff}$ et $Y = A_{ProjH} U_{ProjH}$. Par conséquent $A_{ProjH} U_{\ ProjH} = _{Aff} (Z)^{\ -2} u^3 h_{2\ Aff} Z^3$. Donc $Y = y Z$.

Le point ainsi obtenu est le point équivalent à celui obtenu suite à l'utilisation de la fonction d'encodage simplifiée SWU (version utilisant des coordonnées <u>affines</u>) <u>telle</u> que décrite dans le document **D5.**

Enfin, dans un sixième mode de réalisation, il convient de modifier légèrement la fonction d'encodage simplifiée SWU permettant d'obtenir un point en coordonnées **projective homogène** à partir d'un élément $u$ qui soit équivalent au point obtenu par l'exécution d'une fonction d'encodage simplifiée SWU (version utilisant des coordonnées <u>jacobienne</u>) <u>telle</u> que décrite dans le document **D5.** Le sixième mode de réalisation comprend donc les étapes suivantes :

a) $\alpha = -u^2$ mod p
b) $Z = a(\alpha+ \alpha^2)$ mod p
c) $X_2 = -b(1 + \alpha + \alpha^2 )$ mod p
d) $X_3 = \alpha X_2$ mod p
e) $h_2 = (X_2)^3 + aX_2 Z^2 + bZ^3$ mod p
f) $U = u^3 h_2$ mod p
g) $A = Z.(h_2 Z^3)^{p-1-(p+1)/4}$ mod p
h) si $A^2 h_2 Z = 1$ mod p alors $(X, Y, Z) = (X_2, Ah_2$ mod p $, Z)$
i) sinon $(X, Y, Z) = (X_3, AU$ mod p, Z $)$

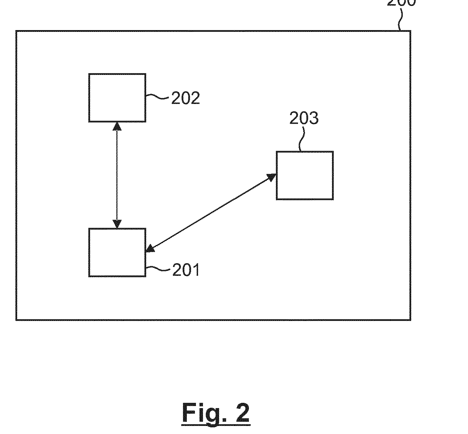

La figure 2 présente un schéma-bloc d'un dispositif mettant en oeuvre la présente invention.

Plus précisément, le dispositif 200, correspondant par exemple au dispositif 102 de la figure 1, et mettant en oeuvre un mode de réalisation de l'invention, comprend une mémoire vive 202 (ou RAM, pour « Random Access Memory » en anglais), qui fonctionne comme une mémoire principale d'une unité de calcul 201 (ou CPU, pour « Central Processing Unit » en anglais). La capacité de cette mémoire vive 202 peut être étendue par une mémoire vive optionnelle, connectée à un port d'expansion (non illustré sur la figure 2). Le dispositif 200 comprend également une mémoire morte 203 (ou ROM, pour « Read Only Memory » en anglais). Après la mise sous tension, l'unité de calcul 201 est capable d'exécuter des instructions contenues dans la mémoire vive 202 et relatives à un programme d'ordinateur, une fois ces instructions chargées à partir de la mémoire morte 203 ou d'une mémoire externe (non illustrée sur la présente figure). Un tel programme d'ordinateur, s'il est exécuté par l'unité de calcul 201, permet l'exécution d'une partie ou la totalité des étapes de la fonction d'encodage simplifiée SWU comprenant des étapes de correction, dans le cas où le dispositif 200 représente une carte à puce.

Dans une variante de réalisation, une partie ou la totalité des étapes d'exécution d'une fonction d'encodage simplifiée, peuvent également être implémentées sous forme de matériel dans un composant programmable de type FPGA (« Field Programmable Gate Array » en anglais) ou de type ASIC (« Application-Specific Integrated Circuit » en anglais).

**Revendications**

1. Procédé cryptographique comprenant la détermination de deux points (x, y) et (X, Y, Z) correspondants appartenant à une courbe elliptique définie sur un corps fini de caractéristique p> 3, avec p un nombre premier vérifiant la propriété p = 3 mod 4, ladite étape de détermination réalisant une fonction d'encodage SWU simplifiée à partir d'un élément secret u, appartenant au corps fini $F_P$, le procédé cryptographique comprenant en outre l'utilisation des deux points dans un procédé cryptographique entre un premier dispositif et un second dispositif, la fonction d'encodage SWU simplifiée étant mise en oeuvre dans un composant électronique du premier dispositif déterminant les points (x, y) en coordonnées affines, par les étapes suivantes :

a) $\alpha = -u^2 \bmod p$
b) $X_2 = -b((1 + \alpha + \alpha^2) / (a(\alpha + \alpha^2))) \bmod p$
c) $X_3 = aX_2 \bmod p$
d) $h_2 = (X_2)^3 + aX_2 + b \bmod p$
f) $U = u^3 h_2 \bmod p$
g) $A = (h_2)^{p-1-(p+1)/4} \bmod p$
h) si $A^2 h_2 = 1 \bmod p$ alors $(x, y) = (X_2, Ah_2 \bmod p)$
i) sinon $(x, y) = (X_3, AU \bmod p)$

**caractérisé en ce que** la fonction d'encodage SWU simplifiée étant mise en oeuvre dans un composant électronique du deuxième dispositif détermine les points (X, Y, Z) en coordonnées jacobiennes par une des deux suites d'étapes suivantes :

a') $\alpha = -u^2 \bmod p$
b') $V = a(\alpha + \alpha^2) \bmod p$
c') $Z = V^2 \bmod p$
d') $X_2 = -bZV(1 + \alpha + \alpha^2) \bmod p$
e) $X^3 = \alpha X_2 \bmod p$
f') $h_2 = (X_2)^3 + aX_2 Z^4 + bZ^6 \bmod p$
h') $U = u^3 h_2 \bmod p$
i') $A = (h_2)^{p-1-(p+1)/4} \bmod p$
j') si $A^2 h_2 = 1 \bmod p$ alors $(X, Y, Z) = (X_2, Ah_2 \bmod p , Z)$
k') sinon $(X, Y, Z) = (X_3, AU \bmod p, Z)$

ou

a) $\alpha = -u^2 \bmod p$
b) $Z = a(\alpha + \alpha^2) \bmod p$
c) $X_2 = -bZ(1 + \alpha + \alpha^2) \bmod p$
d) $X_3 = \alpha X_2 \bmod p$
e) $h_2 = (X_2)^3 + aX_2 Z^4 + bZ^6 \bmod p$

*g) $U = u^3h_2 \bmod p$*

*h) $A = Z. (h_2 . Z^2)^{p-1-(p+1)/4} \bmod p$*

*i) si $A^2h_2 = 1 \bmod p$ alors $(X, Y, Z) = (X_2, Ah_2 \bmod p , Z)$*

*j) sinon $(X, Y, Z) = (X_3, AU \bmod p, Z)$*

ou la fonction d'encodage SWU simplifiée étant mise en oeuvre dans un composant électronique du deuxième dispositif détermine les points (X, Y, Z) en coordonnées projectives homogènes par les étapes suivantes :

*a) $\alpha = -u^2 \bmod p$*

*b) $Z = a(\alpha + \alpha^2) \bmod p$*

*c) $X_2 = -b(1 + \alpha + \alpha^2) \bmod p$*

*d) $X^3 = \alpha X_2 \bmod p$*

*e) $h_2 = (X_2)^3 + aX_2Z^2 + bZ^3 \bmod p$*

*f) $U = u^3h_2 \bmod p$*

*g) $A = (h_2 Z)^{p-1-(p+1)/4} \bmod p$*

*h) si $A^2h_2 Z = 1 \bmod p$ alors $(X, Y, Z) = (X_2, Ah_2 \bmod p , Z)$*

*i) sinon $(X, Y, Z) = (X_3, AU \bmod p, Z)$.*

**2.** Procédé cryptographique comprenant la détermination de deux points (X, Y, Z) et (x, y) correspondants appartenant à une courbe elliptique définie sur un corps fini de caractéristique p> 3, avec p un nombre premier vérifiant la propriété p = 3 mod 4, ladite étape de détermination réalisant une fonction d'encodage SWU simplifiée à partir d'un élément secret u, appartenant au corps fini $F_P$, le procédé cryptographique comprenant en outre l'utilisation des deux points dans un procédé cryptographique entre un premier dispositif et un second dispositif, la fonction d'encodage SWU simplifiée étant mise en oeuvre dans un composant électronique du premier dispositif déterminant les points (X, Y, Z) en coordonnées jacobiennes, par les étapes suivantes :

*a) $\alpha = -u^2 \bmod p$*

*b) $Z = a(\alpha + \alpha^2) \bmod p$*

*c) $X_2 = -bZ(1 + \alpha + \alpha^2) \bmod p$*

*d) $X_3 = \alpha X_2 \bmod p$*

*e) $h_2 = (X_2)^3 + aX_2Z^4 + bZ^6 \bmod p$*

*g) $U = u^3h_2 \bmod p$*

*h) $A = (h_2)^{p-1-(p+1)/4} \bmod p$*

*i) si $A^2h_2 = 1 \bmod p$ alors $(X, Y, Z) = (X_2, Ah_2 \bmod p , Z)$*

*j) sinon $(X, Y, Z) = (X_3, AU \bmod p, Z)$*

**caractérisé en ce que** la fonction d'encodage SWU simplifiée étant mise en oeuvre dans un composant électronique du deuxième dispositif détermine les points (x, y) en coordonnées affines par une des deux suites d'étapes suivantes :

*a) $\alpha = -u^2 \bmod p$*

*b) $X_2 = -b ((1 + \alpha + \alpha^2) / (T)) \bmod p$ avec $T = a(\alpha + \alpha^2) \bmod p$*

*c) $X_3 = \alpha X_2 \bmod p$*

*d) $h_2 = (X_2)^3 + aX_2 + b \bmod p$*

*f) $U u^3h_2 \bmod p$*

*g) $A = T(h_2 T^2)^{p-1-(p+1)/4} \bmod p$*

*h) si $A^2h_2 = 1 \bmod p$ alors $(x, y) = (X_2, Ah_2 \bmod p)$*

*i) sinon $(x, y) = (X_3, AU \bmod p)$*

ou

*a) $\alpha = -u^2 \bmod p$*

*b) $X_2 = -b.s.R. (1+ \alpha + \alpha^2) \bmod p$ avec $T = a(\alpha + \alpha^2) \bmod p$, $R = T^{(p-1)/2-1} \bmod p$ et $s = T.R \bmod p$*

*c) $X_3 = aX_2 \bmod p$*

*d) $h_2 = (X_2)^3 + aX_2 + b \bmod p$*

*f) $U = u^3h_2 \bmod p$*

*g) $A = (h_2)^{p-1-(p+1)/4} \bmod p$*

*h) si $A^2h_2 = 1 \bmod p$ alors $(x, y) = (X_2, s.Ah_2 \bmod p)$*

*i) sinon $(x, y) = (X_3, s.AU \bmod p)$*

ou la fonction d'encodage SWU simplifiée étant mise en oeuvre dans un composant électronique du deuxième dispositif détermine les points (X, Y, Z) en coordonnées projectives homogènes par les étapes suivantes :

a) $\alpha = -u^2 \ mod \ p$

b) $Z = a(\alpha + \alpha^2) \ mod \ p$

c) $X_2 = -b(1 + \alpha + a^2) \ mod \ p$

d) $X_3 = aX_2 \ mod \ p$

e) $h_2 = (X_2)^3 + aX_2Z^2 + bZ^3 \ mod \ p$

f) $U = u^3 h_2 \ mod \ p$

g) $A = Z. (h_2 \ Z^3)^{p-1-(p+1)/4} \ mod \ p$

h) si $A^2 h_2 \ Z = 1 \ mod \ p$ alors $(X, Y, Z) = (X_2, Ah_2 \ mod \ p , Z)$

i) sinon $(X, Y, Z) = (X_3, AU mod \ p, Z)$.

**Patentansprüche**

1. Kryptografisches Verfahren, das die Bestimmung zweier entsprechender Punkte (x, y) und (X, Y, Z) enthält, die zu einer auf einem endlichen Körper mit dem Merkmal p > 3 definierten elliptischen Kurve gehören, wobei p eine Primzahl ist, die die Bedingung p = 3 mod 4 erfüllt, wobei der Schritt der Bestimmung von einem zum endlichen Körper Fp gehörigen geheimen Element u aus eine vereinfachte SWU-Kodierungsfunktion durchführt, wobei das kryptografische Verfahren außerdem die Verwendung der beiden Punkte in einem kryptografischen Verfahren zwischen einer ersten Vorrichtung und einer zweiten Vorrichtung aufweist, wobei die vereinfachte SWU-Kodierungsfunktion, die in einem elektronischen Bauelement der ersten Vorrichtung durchgeführt wird, die Punkte (x, y) in affinen Koordinaten durch die folgenden Schritte bestimmt:

a) $\alpha = -u^2 \ mod \ p$

b) $X_2 = -b((1 + \alpha + \alpha^2) / (\alpha (\alpha + \alpha^2))) \ mod \ p$

c) $X_3 = \alpha X_2 \ mod \ p$

d) $h_2 = (X_2)^3 + aX_2 + b \ mod \ p$

f) $U = u^3 h_2 \ mod \ p$

g) $A = (h_2)^{p-1-(p+1)/4} \ mod \ p$

h) falls $A^2 h_2 = 1 \ mod \ p$, dann $(x, y) = (X_2, A h_2 \ mod \ p)$

i) sonst $(x, y) = (X_3, A U \ mod \ p)$

**dadurch gekennzeichnet, daß** die vereinfachte SWU-Kodierungsfunktion, die in einem elektronischen Bauelement der zweiten Vorrichtung ausgeführt wird, die Punkte (X, Y, Z) in Jacobi-Koordinaten durch eine der beiden nachstehenden Schrittfolgen bestimmt:

a') $\alpha = -u^2 \ mod \ p$

b') $V = \alpha(\alpha + \alpha^2) \ mod \ p$

c') $Z = V^2 \ mod \ p$

d') $X_2 = -bZV(1 + \alpha + \alpha^2) \ mod \ p$

e') $X_3 = \alpha X_2 \ mod \ p$

f') $h_2 = (X_2)^3 + aX_2Z^4 + bZ^6 \ mod \ p$

h') $U = u^3 h_2 \ mod \ p$

i') $A = (h_2)^{p-1-(p+1)/4} \ mod \ p$

j') falls $A^2 \ h_2 = 1 \ mod \ p$, dann $(X, Y, Z) = (X_2, Ah_2 \ mod \ p, Z)$

k') sonst $(X, Y, Z) = (X_3, A U \ mod \ p, Z)$

oder

a) $\alpha = -u^2 \ mod \ p$

b) $Z = \alpha(\alpha + \alpha^2) \ mod \ p$

c) $X_2 = -bZ(1 + \alpha + \alpha^2) \ mod \ p$

d) $X_3 = \alpha X^2 \ mod \ p$

e) $h_2 = (X_2)^3 + aX_2Z^4 + bZ^6 \ mod \ p$

g) $U = u^3 \ h_2 \ mod \ p$

h) $A = Z (h_2 Z^2)^{p-1-(p+1)/4} \ mod \ p$

i) falls $A^2 h_2 = 1\ mod\ p$, dann $(X, Y, Z) = (X_2, A\ h_2\ mod\ p, Z)$

j) sonst $(X, Y, Z) = (X_3, A\ U\ mod\ p, Z)$

oder die vereinfachte SWU-Kodierungsfunktion, die in einem elektronischen Bauelement der zweiten Vorrichtung ausgeführt wird, die Punkte (X, Y, Z) in projektiven homogenen Koordinaten durch die folgenden Schritte bestimmt:

a) $\alpha = -u^2\ mod\ p$

b) $Z = \alpha(\alpha+\alpha^2)\ mod\ p$

c) $X_2 = -b(1+\alpha+\alpha^2)\ mod\ p$

d) $X_3 = \alpha X^2\ mod\ p$

e) $h_2 = (X_2)^3 + aX_2Z^2 + bZ^3\ mod\ p$

f) $U = u^3\ h_2\ mod\ p$

g) $A = (h_2 Z)^{p-1-(p+1)/4}\ mod\ p$

h) falls $A^2 h_2 Z = 1\ mod\ p$, dann $(X, Y, Z) = (X_2, A\ h_2\ mod\ p, Z)$

i) sonst $(X, Y, Z) = (X_3, A\ U\ mod\ p, Z)$.

**2.** Kryptografisches Verfahren, das die Bestimmung zweier entsprechender Punkte (X, Y, Z) und (x, y) enthält, die zu einer auf einem endlichen Körper mit dem Merkmal p > 3 definierten elliptischen Kurve gehören, wobei p eine Primzahl ist, die die Bedingung p = 3 mod 4 erfüllt, wobei der Schritt der Bestimmung von einem zum endlichen Körper Fp gehörigen geheimen Element u aus eine vereinfachte SWU-Kodierungsfunktion durchführt, wobei das kryptografische Verfahren außerdem die Verwendung der beiden Punkte in einem kryptografischen Verfahren zwischen einer ersten Vorrichtung und einer zweiten Vorrichtung aufweist, wobei die vereinfachte SWU-Kodierungsfunktion, die in einem elektronischen Bauelement der ersten Vorrichtung durchgeführt wird, die Punkte (X, Y, Z) in Jacobi-Koordinaten durch die folgenden Schritte bestimmt:

a) $\alpha = -u^2\ mod\ p$

b) $Z = \alpha(\alpha+\alpha^2)mod\ p$

c) $X_2 = -b\ Z\ (1 + \alpha + \alpha^2)\ mod\ p$

d) $X_3 = \alpha\ X_2\ mod\ p$

e) $h_2 = (X_2)^3 + aX_2Z^4 + bZ^6\ mod\ p$

g) $U = u^3\ h2\ mod\ p$

h) $A = (h_2)^{p-1-(p+1)/4}\ mod\ p$

i) falls $A^2\ h_2 = 1\ mod\ p$, dann $(X, Y, Z) = (X_2, A\ h_2\ mod\ p, Z)$

j) sonst $(X, Y, Z) = (X_3, A\ U\ mod\ p, Z)$

**dadurch gekennzeichnet, daß** die vereinfachte SWU-Kodierungsfunktion, die in einem elektronischen Bauelement der zweiten Vorrichtung ausgeführt wird, die Punkte (x, y) in affinen Koordinaten durch eine der beiden nachstehenden Schrittfolgen bestimmt:

a) $\alpha = -u^2\ mod\ p$

b) $X_2 = -b((1+\alpha+\alpha^2)/(T))mod\ p$, mit $T=\alpha(\alpha+\alpha^2)mod\ p$

c) $X_3 = \alpha\ X_2\ mod\ p$

d) $h_2 = (X_2)^3 + \alpha X_2 + b\ mod\ p$

f) $U = u^3\ h_2\ mod\ p$

g) $A = T\ (h_2\ T^2)^{p-1-(p+1)/4}\ mod\ p$

h) falls $A^2\ h2 = 1\ mod\ p$, dann $(x, y) = (X_2, A\ h_2\ mod\ p)$

i) sonst $(x, y) = (X_3, A\ U\ mod\ p)$

oder

a) $\alpha = -u^2\ mod\ p$

b) $X_2 = -b \cdot s \cdot R\ (1 + \alpha + \alpha^2)\ mod\ p$, mit $T = \alpha\ (\alpha + \alpha^2)\ mod\ p$, $R = T^{(p-1)/2-1}\ mod\ p$ und $s = T\ R\ mod\ p$

c) $X_3 = \alpha\ X_2\ mod\ p$

d) $h_2 = (X_2)^3 + aX_2 + b\ mod\ p$

f) $U = u^3 h_2\ mod\ p$

g) $A = (h_2)^{p-1-(p+1)/4}\ mod\ p$

h) falls $A^2\ h_2 = 1\ mod\ p$, dann $(x, y) = (X_2, s \cdot A\ h_2\ mod\ p)$

i) sonst $(x, y) = (X_3, s \cdot A\ U mod\ p)$

oder die vereinfachte SWU-Kodierungsfunktion, die in einem elektronischen Bauelement der zweiten Vorrichtung ausgeführt wird, die Punkte (X, Y, Z) in projektiven homogenen Koordinaten durch die folgenden Schritte bestimmt:

a) $\alpha = -u^2 \bmod p$
b) $Z = \alpha(\alpha+\alpha^2) \bmod p$
c) $X_2 = -b (1 + \alpha + a^2) \bmod p$
d) $X_3 = a\, X_2 \bmod p$
e) $h_2 = (X_2)^3 + a\, X_2\, Z^2 + b\, Z^3 \bmod p$
f) $U = u^3\, h_2 \bmod p$
g) $A = Z(h_2 Z^3)^{p-1-(p+1)/4} \bmod p$
h) falls $A^2\, h_2\, Z = 1 \bmod p$, dann $(X, Y, Z) = (X_2, A\, h_2 \bmod p, Z)$
i) sonst $(X, Y, Z) = (X_3, A\, U \bmod p, Z)$.

## Claims

1. A cryptographic method comprising determining two corresponding points (x, y) and (X, Y, Z) belonging to an elliptic curve defined over a finite field of characteristic p > 3, where p is a prime number satisfying the property p = 3 mod 4, said determination step performing a simplified SWU encoding function from a secret element u belonging to the finite field Fp, the cryptographic method further comprising the use of the two points in a cryptographic method between a first device and a second device, the simplified SWU encoding function being performed in an electronic component of the first device determining the points (x, y) in affine coordinates, by the following steps:

a) $\alpha = -u^2 \bmod p$
b) $X_2 = -b ((1 + \alpha + \alpha^2)/(a(\alpha+\alpha^2))) \bmod p$
c) $X_3 = \alpha\, X_2 \bmod p$
d) $h_2 = (X_2)^3 + a\, X_2 + b \bmod p$
f) $U = u^3 h_2 \bmod p$
g) $A = (h_2)^{p-1-(p+1)/4} \bmod p$
h) if $A^2 h_2 = 1 \bmod p$ then $(x, y) = (X_2, A h_2 \bmod p)$
i) else $(x, y) = (X_3, AU \bmod p )$

the method being **characterized in that** the simplified SWU encoding function being performed in an electronic component of the second device determines the points (X, Y, Z) in Jacobian coordinates by one of the following two sets of steps:

a') $\alpha = -u^2 \bmod p$
b') $V = a(\alpha+ a^2) \bmod p$
c') $Z = V^2 \bmod p$
d') $X_2 = -bZV(1 + \alpha + \alpha^2) \bmod p$
e') $X_3 = \alpha\, X_2 \bmod p$
f') $h_2 = (X_2)^3 + a X_2 Z^4 + b Z^6 \bmod p$
h') $U = u^3 h_2 \bmod p$
i') $A = (h_2)^{p-1-(p+1)/4} \bmod p$
j') if $A^2 h_2 = 1 \bmod p$ then $(X, Y, Z) = (X_2, A h_2 \bmod p , Z)$
k') else $(X, Y, Z) = (X_3, A\, U \bmod p, Z)$

or

a) $\alpha = -u^2 \bmod p$
b) $Z = a(\alpha+\alpha^2) \bmod p$
c) $X_2 = -bZ(1 + \alpha + a^2) \bmod p$
d) $X_3 = \alpha\, X_2 \bmod p$
e) $h_2 = (X_2)^3 + a X_2 Z^4 + b Z^6 \bmod p$
g) $U = u^3 h_2 \bmod p$
h) $A = Z.(h_2 Z_2)^{p-1-(p+1)/4} \bmod p$
i) if $A^2 h_2 = 1 \bmod p$ then $(X, Y, Z) = (X_2, A h_2 \bmod p , Z)$
j) else $(X, Y, Z) = (X_3, A\, U \bmod p, Z)$.

or the simplified SWU encoding function being performed in an electronic component of the second device determines the points (X, Y, Z) in homogeneous projective coordinates by the following steps:

a) $\alpha = -u^2 \bmod p$

b) $Z = a(\alpha + \alpha^2) \bmod p$

c) $X_2 = -b(1 + \alpha + \alpha^2) \bmod p$

d) $X_3 = \alpha X_2 \bmod p$

e) $h_2 = (X_2)^3 + aX_2Z^2 + bZ^3 \bmod p$

f) $U = u^3h_2 \bmod p$

g) $A = (h_2 Z)^{p-1-(p+1)/4} \bmod p$

h) if $A^2h_2 Z = 1 \bmod p$ then $(X, Y, Z) = (X_2, Ah_2 \bmod p, Z)$

i) else $(X, Y, Z) = (X_3, A U \bmod p, Z)$.

**2.** A cryptographic method comprising determining two corresponding points (X, Y, Z) and (x, y) belonging to an elliptic curve defined over a finite field of characteristic p > 3, where p is a prime number satisfying the property p = 3 mod 4, said determination step performing a simplified SWU encoding function from a secret element u belonging to the finite field Fp, the cryptographic method further comprising the use of the two points in a cryptographic method between a first device and a second device, the simplified SWU encoding function being performed in an electronic component of the first device determining the points (X, Y, Z) in Jacobian coordinates by the following steps:

a) $\alpha = -u^2 \bmod p$

b) $Z = a(\alpha + \alpha^2) \bmod p$

c) $X_2 = -bZ(1 + \alpha + \alpha^2) \bmod p$

d) $X_3 = \alpha X_2 \bmod p$

e) $h2 = (X_2)^3 + aX_2Z^4 + bZ^6 \bmod p$

g) $U = u^3h_2 \bmod p$

h) $A = (h_2)^{p-1-(p+1)/4} \bmod p$

i) if $A^2h_2 = 1 \bmod p$ then $(X, Y, Z) = (X_2, Ah_2 \bmod p, Z)$

j) else $(X, Y, Z) = (X_3, A U \bmod p, Z)$

the method being **characterized in that** the simplified SWU encoding function being performed in an electronic component of the second device determines the points (x, y) in affine coordinates by one of the following two sets of steps:

a) $\alpha = -u^2 \bmod p$

b) $X_2 = -b ((1 + \alpha + \alpha^2) / (T)) \bmod p$ with $T = a(\alpha + a^2) \bmod p$

c) $X_3 = \alpha X_2 \bmod p$

d) $h2 = (X_2)^3 + aX_2 + b \bmod p$

j) $U = u^3h_2 \bmod p$

g) $A = T(h_2 T^2)^{p-1-(p+1)/4} \bmod p$

h) if $A^2h_2 = 1 \bmod p$ then $(x, y) = (X_2, Ah_2 \bmod p)$

i) else $(x, y) = (X_3, AU \bmod p)$

or

a) $\alpha = -u^2 \bmod p$

b) $X_2 = -b.s.R. (1 + \alpha + \alpha^2) \bmod p$ with $T = a(\alpha + \alpha^2) \bmod p$, $R = T^{(p-1)/2-1} \bmod p$ and $s = T.R \bmod p$

c) $X_3 = \alpha X_2 \bmod p$

d) $h_2 = (X_2)^3 + aX_2 + b \bmod p$

f) $U = u^3h_2 \bmod p$

g) $A = (h_2)^{p-1-(p+1)/4} \bmod p$

h) if $A^2h_2 = 1 \bmod p$ then $(x, y) = (X_2, s.Ah_2 \bmod p)$

i) else $(x, y) = (X_3, s.AU \bmod p)$

or the simplified SWU encoding function being performed in an electronic component of the second device determines the points (X, Y, Z) in homogeneous projective coordinates by the following steps:

a) $\alpha = -u^2 \bmod p$

b) $Z = a(\alpha + \alpha^2) \bmod p$

c) $X_2 = -b(1 + \alpha + \alpha^2) \bmod p$

d) $X_3 = \alpha X_2 \bmod p$

e) $h_2 = (X_2)^3 + aX_2Z^2 + bZ^3 \bmod p$

f) $U = u^3 h_2 \bmod p$

g) $A = Z.(h_2 Z^3)^{p-1-(p+1)/4} \bmod p$

h) if $A^2 h_2 Z = 1 \bmod p$ then $(X, Y, Z) = (X_2, Ah_2 \bmod p, Z)$

i) else $(X, Y, Z) = (X_3, AU \bmod p, Z)$.

Fig. 1

**Fig. 2**

**EP 2 527 970 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE R.R. FARASHAHI.** *Indifferentiable Deterministic Hashing to Elliptic and Hyperelliptic Curves*
- How to Hash into Elliptic Curves. **T. ICART.** annales de la conférence CRYPTO 09. 2009
- **BRIER et al.** *Efficient Indifferentiable Hashing into Ordinary Elliptic Curves*
- Supplemental Access control for Machine Readable Travel Documents v.1.01. International Civil Aviation Organization. l'organisme ICAO
- **J.S. CORON et al.** *Supplemental Access control (PACE v2) : Security Analysis of PACE Integrated Mapping*